Europäisches Patentamt

(19) European Patent Office

Office européen des brevets

(11) Numéro de publication: **0 139 575**
**A2**

(12) # DEMANDE DE BREVET EUROPEEN

(21) Numéro de dépôt: **84401971.1**

(22) Date de dépôt: **03.10.84**

(51) Int. Cl.⁴: **H 02 G 13/00**

(30) Priorité: **07.10.83 FR 8316009**

(43) Date de publication de la demande:
**02.05.85 Bulletin 85/18**

(84) Etats contractants désignés:
**AT BE CH DE FR GB IT LI LU NL SE**

(71) Demandeur: **HELITA, Société Française**
**116 rue du Bac**
**F-75007 Paris(FR)**

(72) Inventeur: **Pierson, Alexandre**
**Route de Saussières**
**St-Hilaire de Beauvoir F-34160 Castries(FR)**

(74) Mandataire: **Martin, Jean-Jacques et al,**
**Cabinet REGIMBEAU 26, Avenue Kléber**
**F-75116 Paris(FR)**

(54) **Dispositif auto-alimenté de protection contre la foudre.**

(57) L'invention concerne un dispositif de protection contre la foudre comprenant au moins une pointe de paratonnerre (300), isoléede la terre à laquelle elle est reliée à sa base par un dispositif éclateur principal (220, 520).

Selon l'invention, le dispositif comprend également : au moins un élément conducteur, par exemple la pointe (300) elle-même, isolé de la terre s'étendant dans le champ électrique ambiant de manière à être parcouru par le courant induit par les variations de ce champ électrique ambiant ainsi que par le courant d'effluve; reliés à la base de l'élément conducteur, des moyens accumulateurs (110, 210) propres à recueillir et à accumuler l'énergie résultant du courant parcourant cet élément conducteur; des moyens relaxateurs (220, 520) propres à décharger périodiquement dans la pointe de paratonnerre l'énergie ainsi accumulée.

Une inductance (500) permet de rendre cette décharge oscillante.

FIG_7

1

## DISPOSITIF AUTO-ALIMENTE DE PROTECTION CONTRE LA FOUDRE

La présente invention concerne un dispositif de protection contre la foudre.

Dans le dispositif connu sous le nom de "pointe Franklin", une pointe de paratonnerre reliée à la terre provoque une déformation locale, très importante, du champ électrique.

Une première conséquence de cette déformation locale est la possibilité, dans le cas d'un coup de foudre descendant (cas le plus fréquent en région de plaine), de faire dévier la tête du précurseur, c'est-à-dire du premier canal ionisé observé correspondant à la décharge en formation avant que celle-ci ne soit encore arrivée au sol. C'est ce qui explique que la pointe de paratonnerre constitue un point d'impact préférentiel pour le coup de foudre.

Une seconde conséquence est que, lorsque le précurseur approche d'une structure reliée au sol, les points saillants de celle-ci - et notamment une pointe de paratonnerre de grande hauteur - se mettent à effluver sous l'action du champ intense développé et donnent naissance à des étincelles ou filaments montants. Dans le cas d'un coup de foudre descendant, le premier filament à atteindre le canal ionisé déterminera le point de chute au sol ; cet effluvage peut également avoir pour effet de favoriser l'apparition d'un coup de foudre ascendant.

Cependant, la formation d'un précurseur ascendant ne se rencontre que dans le cas de parties saillantes de très grande hauteur, ce dernier paramètre n'étant pas le plus important pour accroître la probabilité d'apparition d'un coup de foudre ascendant.

L'invention a pour objet un dispositif permettant de favoriser l'apparition d'un tel précurseur ascendant, ou, à tout le moins, d'agir sur la dernière étape d'un

2

précurseur descendant, de manière à favoriser l'effluvage, en amplifiant l'effet de pointe du paratonnerre.

Il a en effet été constaté que les précurseurs ascendants, outre le cas des objets de très grande hauteur, apparaissent surtout en présence d'une variation suffisamment rapide du champ électrique local; ce phénomène explique en particulier la possibilité de déclencher un tel coup de foudre au moyen d'un tir de fusée entraînant un fil conducteur, pour une hauteur de trajectoire relativement modeste (souvent moins de 100 m) mais avec une vitesse élevée de la fusée. La variation du champ électrique due à l'avance de la fusée doit en effet être suffisamment rapide pour que le nuage ionisé produit par la fusée tirant son fil n'ait pas le temps de se développer.

Le déclenchement du coup de foudre par tir de fusée est cependant un procédé coûteux et délicat à mettre en oeuvre ; il nécessite en outre une surveillance permanente de l'évolution des conditions atmosphériques pour pouvoir procéder au tir au moment le plus opportun.

Le dispositif proposé est par contre purement statique. Il est en outre auto-alimenté, et son efficacité croît en même temps que le gradient de potentiel ambiant, c'est-à-dire en même temps que la probabilité de survenance d'un coup de foudre.

Ce dispositif comprend au moins une pointe de paratonnerre isolée de la terre, à laquelle elle est reliée à sa base par un dispositif éclateur principal.

Selon l'invention, le dispositif comprend également :

. au moins un élément conducteur isolé de la terre s'étendant dans le champ électrique ambiant de manière à être parcouru par le courant induit par les variations de ce champ électrique ambiant ainsi que par le courant d'effluve,

. reliés à la base de l'élément conducteur, des moyens accumulateurs propres à recueillir et à accumuler l'énergie résultant du courant parcourant cet élément conducteur,

. des moyens relaxateurs propres à décharger périodiquement dans la pointe de paratonnerre l'énergie ainsi accumulée.

On dispose ainsi d'un générateur d'impulsions susceptible de faire varier très rapidement le potentiel de la pointe ; en outre et surtout, ce générateur n'a pas besoin d'être relié à une source extérieure d'énergie, la charge des moyens accumulateurs étant assurée directement d'une part par le courant d'effluve dans l'élément conducteur - qui peut être formé par la pointe de paratonnerre elle-même - , d'autre part par le champ électrique croissant dû à l'approche d'un précurseur descendant (dans le cas d'un coup de foudre imminent). Dans ce dernier cas, le champ est en effet très élevé : il atteint généralement des valeurs de l'ordre de 400 à 500 kV/m.

Dans un premier mode de réalisation, les moyens accumulateurs comprennent, à la base de la pointe de paratonnerre et en parallèle avec l'éclateur principal, au moins un étage formé d'un condensateur mis en parallèle avec un ensemble formé d'une inductance en série avec un éclateur secondaire, cet éclateur secondaire ayant une tension d'amorçage inférieure à celle de l'éclateur principal, de manière à former moyen relaxateur.

Plus précisément, le dispositif comprend :
. un élément intérieur central, relié à la terre,
. un élément extérieur périphérique, relié à la pointe de paratonnerre et recouvrant partiellement l'élément intérieur, ces deux éléments ayant des surfaces en regard situées à faible distance formant armatures du condensateur,

. des moyens formant éclateur principal entre ces deux éléments,

. enroulé autour de la partie de l'élément extérieur non recouverte, un bobinage ayant sa partie inférieure reliée à la terre et sa partie supérieure terminée par un anneau placé en regard d'un rebord périphérique de l'élément extérieur, de manière à former éclateur secondaire.

Dans un second mode de réalisation, les moyens accumulateurs et relaxateurs sont formés par un générateur de Marx dont chaque étage comprend un éclateur dont la tension d'amorçage est telle que la somme des tensions d'amorçage de chaque étage soit inférieure à celle de l'éclateur principal, ce générateur étant alimenté par au moins un élément conducteur relié à l'un des étages du générateur.

D'autres caractéristiques et avantages de l'invention apparaîtront à la lecture de la description détaillée ci-dessous, faite en référence aux dessins annexés, sur lesquels :

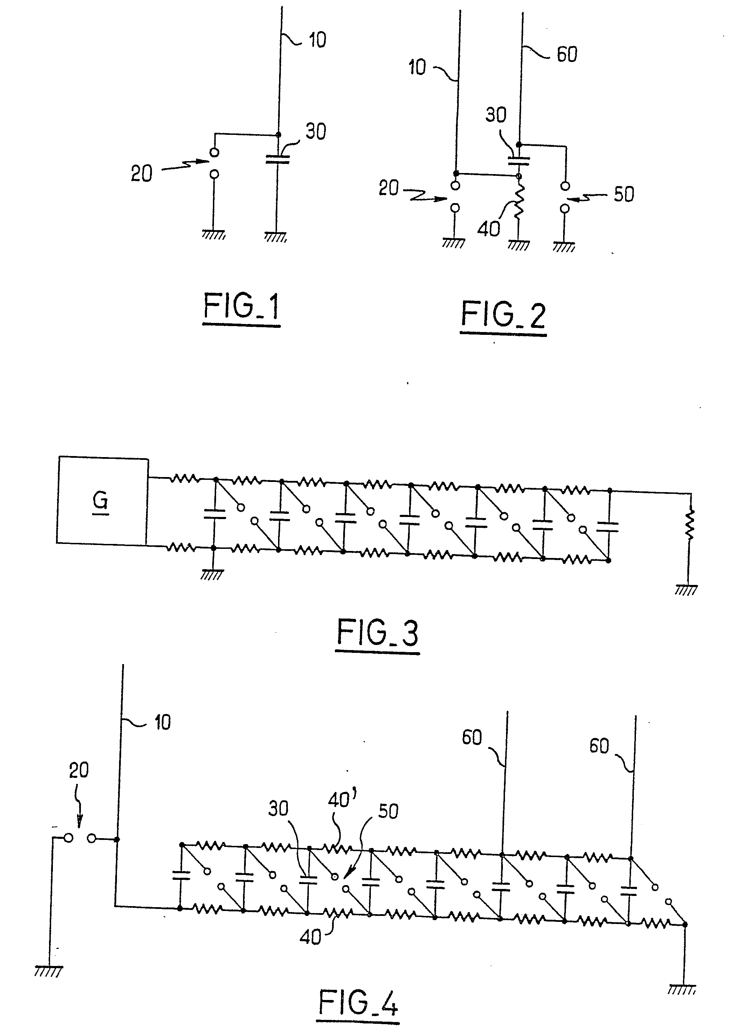

. la figure 1 est un schéma de base autour duquel sont élaborés les différents modes de réalisation,

. la figure 2 représente un mode de réalisation à étage unique résistance-capacité,

. la figure 3 illustre le principe d'un générateur de Marx,

. la figure 4 montre l'application de ce générateur au dispositif de l'invention,

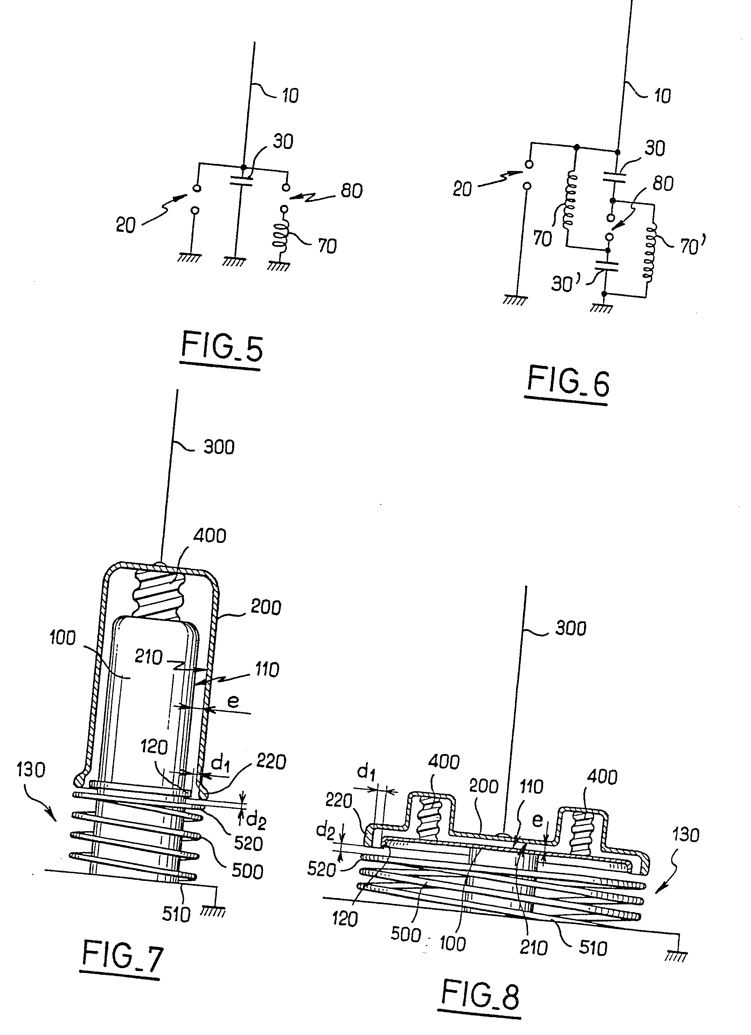

. la figure 5 correspond à un autre mode de réalisation, à étage unique capacité-inductance,

. la figure 6 correspond au même mode de réalisation, avec deux étages,

. les figures 7 et 8 montrent deux exemples pratiques du mode de réalisation de la figure 5.

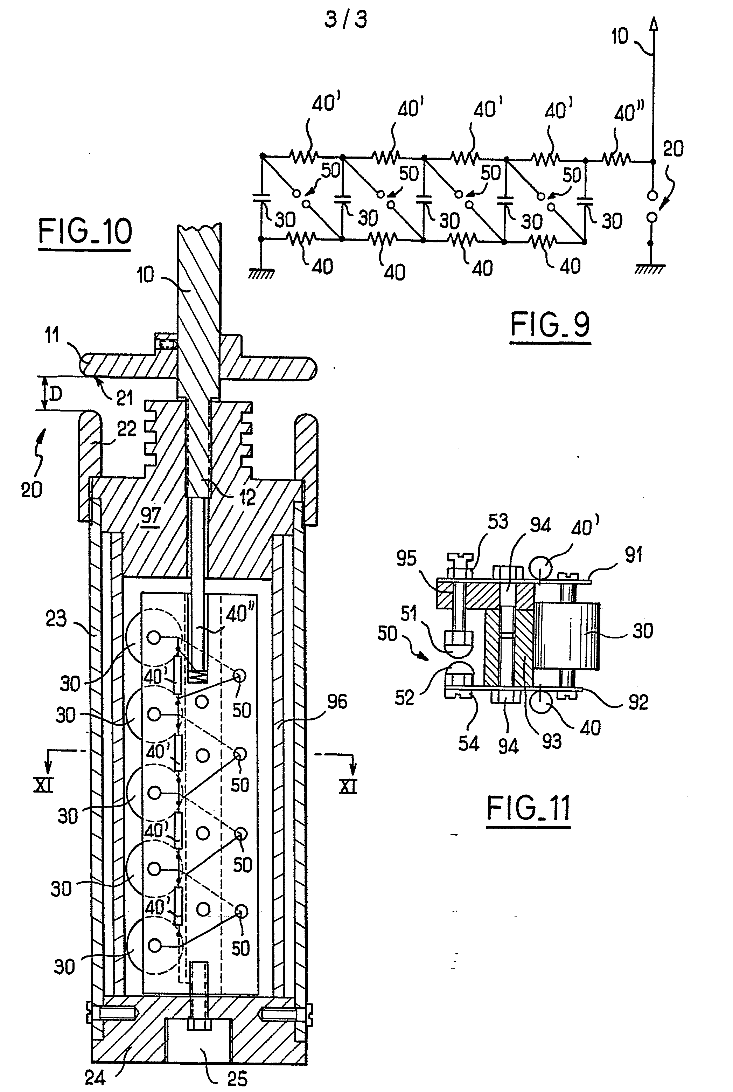

. les figures 9 à 11 montrent un mode de réalisation d'un dispositif à cinq étages résistance-capacité.

La figure 1 montre le schéma de base autour duquel sont conçus les différents modes de réalisation de l'invention : une pointe de paratonnerre 10 ("tige Franklin") est disposée en série avec un éclateur principal 20 permettant de dériver l'énergie du coup de foudre vers la terre lorsque la pointe est frappée. Entre la base de la pointe et la terre est disposé un condensateur 30 qui va accumuler l'énergie résultant du courant d'effluve circulant dans la pointe 10.

Le fonctionnement du dispositif est le suivant : par temps d'orage, un champ électrique de 10 à 15 kV/m est susceptible de produire dans la pointe un courant d'ionisation de l'ordre de 10 µA. La tension va alors croître aux bornes du condensateur 30 amenant une réduction du champ à l'extrémité de la pointe, ainsi qu'une diminution du courant.

L'éclateur 20 est ajusté pour s'amorcer avant que ce courant ne s'annule ; le condensateur se décharge alors rapidement, et le phénomène recommence.

Pour une capacité de 200 pF, une valeur moyenne de courant de 5 µA, et un éclateur réglé à 25 kV, on calcule que l'intervalle entre deux décharges est de 1 s.

La fréquence du phénomène augmente avec le champ électrique ambiant, et donc avec la probabilité d'un coup de foudre.

Le potentiel de la pointe va passer de -25 kV à une valeur nulle (dans le cas d'un nuage négatif, cas le plus fréquent), et cette brusque variation de potentiel est susceptible de favoriser l'apparition d'un précurseur ascendant.

La figure 2 est une variante de la figure 1, dans laquelle, outre la pointe 10, l'éclateur principal 20 et le condensateur 30, on trouve une résistance de charge 40, un éclateur secondaire 50 et une pointe auxiliaire 60. Dans ce cas, c'est la pointe auxiliaire 60 qui capte l'énergie et charge le condensateur 30, la décharge de celui-ci étant déterminée par l'éclateur 50 dont la tension d'amorçage est choisie inférieure à celle de l'éclateur principal 20 de la pointe.

Avec les mêmes valeurs numériques que précédemment, on obtient ainsi une variation du potentiel de la pointe 10 de 0 à +25 kV au moment de la décharge.

Pour augmenter l'efficacité du dispositif, il est possible de multiplier le nombre d'étage résistance-capacité-éclateur. En fait, la figure 2 ne constitue que le cas particulier d'un générateur de Marx à un étage.

Dans un générateur de Marx (figure 3) une batterie de condensateurs est chargée en parallèle à travers des résistances par un générateur de tension continue G. Des éclateurs, prévus dans chaque étage, assurent la mise en série des condensateurs. Au moment de la charge, la tension aux bornes des condensateurs augmente progressivement ; dès que la tension dépasse le seuil d'amorçage de l'un des éclateurs, l'impédance de celui-ci devient très faible, et la tension du condensateur associée est reportée sur les autres éclateurs, entraînant un amorçage en chaîne de ceux-ci.

La figure 4 montre une application d'un tel générateur à huit étages au dispositif de l'invention : chaque étage comprend un condensateur 30, une résistance de charge répartie en deux éléments 40, 40', et un éclateur secondaire 50.

Un ou plusieurs des étages sont pourvus de conducteurs 60 permettant la captation de l'énergie ambiante pour auto-alimenter le générateur. A son extrémité, le générateur est relié à la pointe de paratonnerre principale 10 dans laquelle sera déchargée périodiquement cette énergie. Comme précédemment, la tension d'amorçage de l'éclateur principal 20 est supérieure à la somme des tensions d'amorçage des éclateurs secondaires 50, pour que la décharge de l'énergie se fasse bien dans la pointe, sans être dérivée vers la terre.

La figure 5 illustre un second mode de réalisation, dans lequel on a ajouté au schéma de la figure 1,
en parallèle avec le condensateur 30, un ensemble formé
d'une inductance 70 en série avec un éclateur secondaire
80. De cette manière, lorsque l'éclateur secondaire 80 sera
périodiquement amorcé, la décharge du condensateur sera
une décharge oscillante, le potentiel de la pointe variant
entre -25 et +25 kV (avec les valeurs numériques précitées)
avec un temps d'inversion extrêmement bref. Si l'on choisit
une inductance de 0,5 mH, le temps d'inversion (demi-période)
est ainsi de 1 µs.

Il est possible de multiplier le nombre des
étages condensateur-inductance-éclateur secondaire. La
figure 6 illustre par exemple un dispositif à deux étages :
chaque étage comprend un condensateur 30, 30' et une inductance 70, 70', l'éclateur 80 étant commun aux deux étages
par souci de simplification du schéma.

Les figures 7 et 8 montrent deux exemples
pratiques de mise en oeuvre du dispositif schématisé figure
5. Les mêmes références numériques sont utilisées pour les
deux figures, la figure 7 décrivant un dispositif de forme
tubulaire allongée, alors que la figure 8 se réfère à un
dispositif plat en forme de disque.

Un corps central 100, relié à la terre, est
partiellement coiffé par un élément extérieur 200 relié à
la pointe de paratonnerre 300. La pointe n'est pas forcément
fixée à cet élément 200, mais peut être reliée à celui-ci
par un fil bien isolé.

Les deux éléments 100 et 200 sont maintenus à
distance par un ou plusieurs isolateurs 400 ; ils ont des
surfaces 110 et 210 en regard, de manière à former les deux
armatures du condensateur dont l'épaisseur d'air $e$ constitue
le diélectrique (l'emploi d'un condensateur à air permet au dispositif d'encaisser un coup de foudre sans dommage).

L'éclateur principal est formé par un rebord 220 de l'élément extérieur placé à une distance $d_1$ du corps central, par exemple d'un rebord 120 de celui-ci.

Autour de la partie 130 du corps central non recouverte est enroulé un bobinage 500 dont la base 510 est reliée à la terre, et la partie supérieure reliée à un anneau 520 disposé en vis-à-vis du rebord 220 de l'élément extérieur, et à une distance $d_2$ de celui-ci, de manière à former éclateur secondaire.

On notera que le bobinage doit être capable de supporter un éventuel amorçage entre spires afin que le dispositif puisse encaisser un éventuel coup de foudre sans dommage.

D'autres moyens de protection en cas de surtension peuvent être employés (résistances, inductances), notamment si l'on souhaite employer, au lieu d'un condensateur à air, des condensateurs conventionnels à diélectrique solide (papier, céramique, ....) en vue de diminuer les dimensions du dispositif.

Un autre exemple de réalisation est représenté en référence aux figures 9 à 11 :

. la figure 9 montre le schéma électrique équivalent de ce mode de réalisation, qui est dérivé du générateur de Marx de la figure 4 et comporte cinq étages ;

. la figure 10 est une vue en coupe, en élévation, et la figure 11 est une coupe transversale, selon la ligne XI-XI de la figure 10.

Ces figures reprennent les références numériques déjà utilisées dans la description des figures précédentes qui correspondent à des éléments assurant les mêmes fonctions : les cinq étages du générateur de Marx comportent une capacité 30, deux résistances 40, 40' et un éclateur 50. L'ensemble est relié à une tige de paratonnerre 10 et pourvu d'un éclateur 20 destiné à dériver le coup de foudre vers la terre.

Les valeurs des deux résistances 40 et 40' sont par exemple de 100 kΩ et celles des condensateurs 30 de 470 pF. Il est en outre prévu, entre la sortie du générateur et la tige du paratonnerre, une résistance de protection (de 300 kΩ par exemple) destinée à éviter qu'un courant trop intense ne vienne endommager les étages du générateur lors de la survenance d'un coup de foudre.

Sur les figures 10 et 11, on a représenté l'implantation des différents éléments du dispositif : la tige de paratonnerre 10 est pourvue à sa base d'un disque 11 dont la surface inférieure 21 forme l'une des armatures de l'éclateur, l'autre armature étant constituée par une couronne cylindrique 22 placée à une distance D, fonction de la tension disruptive souhaitée, de la surface 21. La couronne 22 est reliée à un boîtier métallique 23 terminé en partie inférieure par un socle 24 comportant des moyens de fixation (par exemple un trou taraudé 25) à la hampe du paratonnerre, reliée à la terre.

La partie centrale de la tige 10 porte un prolongement 12 en partie inférieure, relié à la résistance de protection 40".

Les composants (condensateurs 30, résistances 40 et 40', éclateurs 50) du générateur sont disposés, à l'intérieur du boîtier métallique 23, sur deux circuits imprimés 91, 92 (figure 11) placés en vis-à-vis. Un des circuits porte par exemple les résistances 40, et l'autre les résistances 40' ; les condensateurs 30 sont placés entre les deux circuits.

10

Les circuits sont maintenus à distance au moyen d'une entretoise 93 sur laquelle ils sont fixés par des vis 94. Les éclateurs 50 sont constitués de deux trous borgnes à tête ronde 51, 52 placés en vis-à-vis et solidarisés aux circuits imprimés par des vis 53, 54. L'écartement est réglé par le positionnement de la vis 53, visséedans un flasque 95 solidaire du circuit 91.

L'ensemble du circuit de générateur est placé dans un cylindre 96 en matériau diélectrique formant enveloppe isolante ; ce cylindre est fermé en partie supérieure par un bouchon 97 traversé par la partie inférieure 12 de la tige et servant au surplus à isoler cette partie de la couronne cylindrique 22 de l'éclateur.

REVENDICATIONS

1. Un dispositif de protection contre la foudre comprenant au moins une pointe de paratonnerre (10) isolée de la terre, à laquelle elle est reliée à sa base par un dispositif éclateur principal (20),

caractérisé en ce qu'il comprend également :

. au moins un élément conducteur (10 ; 60) isolé de la terre s'étendant dans le champ électrique ambiant de manière à être parcouru par le courant induit par les variations de ce champ électrique ambiant ainsi que par le courant d'effluve,

. reliés à la base de l'élément conducteur, des moyens accumulateurs (30, 70 ; 30) propres à recueillir et à accumuler l'énergie résultant du courant parcourant cet élément conducteur,

. des moyens relaxateurs (80 ; 50) propres à décharger périodiquement dans la pointe de paratonnerre l'énergie ainsi accumulée.

2. Un dispositif selon la revendication 1, caractérisé en ce que l'élément conducteur est formé par la pointe de paratonnerre (10).

3. Un dispositif selon la revendication 2, caractérisé en ce que les moyens accumulateurs comprennent, à la base de la pointe de paratonnerre et en parallèle avec l'éclateur principal (20), au moins un étage formé d'un condensateur (30) mis en parallèle avec un ensemble formé d'une inductance (70) en série avec un éclateur secondaire (80), cet éclateur secondaire ayant une tension d'amorçage inférieure à celle de l'éclateur principal, de manière à former moyen relaxateur.

4. Un dispositif selon la revendication 3, caractérisé en ce qu'il comprend :

. un élément intérieur (100) central, relié à la terre,

. un élément extérieur (200) périphérique, relié à la pointe de paratonnerre (300) et recouvrant partiellement l'élément intérieur, ces deux éléments ayant des surfaces (110, 210) en regard situées à faible distance (e) formant armatures du condensateur,

. des moyens (120, 220) formant éclateur principal entre ces deux éléments,

. enroulé autour de la partie (130) de l'élément extérieur non recouverte, un bobinage (500) ayant sa partie inférieure (510) reliée à la terre et sa partie supérieure terminée par un anneau (520) placé en regard d'un rebord périphérique (220) de l'élément extérieur, de manière à former éclateur secondaire.

5. Un dispositif selon la revendication 1, caractérisé en ce que les moyens accumulateurs et relaxateurs sont formés par un générateur de Marx dont chaque étage (30, 40, 40', 50) comprend un éclateur (50), dont la tension d'amorçage est telle que la somme des tensions d'amorçage de chaque étage soit inférieure à celle de l'éclateur principal, ce générateur étant alimenté par au moins un élément conducteur (60) relié à l'un des étages du générateur.

6. Un dispositif selon la revendication 1, caractérisé en ce que les moyens accumulateurs comprennent au moins un condensateur à diélectrique solide, le dispositif comprenant en outre des moyens de protection de ce condensateur contre les surtensions.

FIG.1

FIG.2

FIG.3

FIG.4

FIG_5

FIG_6

FIG_7

FIG_8

FIG_9

FIG_10

FIG_11